# FASCICULE DE BREVET EUROPEEN

(11) **EP 0 647 597 B1**
(45) Date de publication et mention de la délivrance du brevet: **05.08.1998**
(21) Numéro de dépôt: 94402278.9
(22) Date de dépôt: 11.10.1994
(51) Int. Cl.: C02F 9/00, C02F 1/28, C02F 1/42, B01D 36/00, F28D 21/00

(54) **Station de traitement et de recyclage d'eau de lavage d'une machine à laver**
Vorrichtung zur Behandlung und Rückführung von Waschwasser aus einer Waschmaschine
Installation for treating and recycling washing water of a washing machine

(30) Priorité: 12.10.1993 FR 9312125
(43) Date de publication de la demande: 12.04.1995
(73) Titulaire: AEROSPATIALE Société Nationale Industrielle, 75781 Paris Cédex 16 (FR)
(72) Inventeur: Espiau, Jacques, F-31770 Colomiers (FR)
(74) Mandataire: Dubois-Chabert, Guy

(56) Documents cités:
- US-A- 4 724 079
- PATENT ABSTRACTS OF JAPAN vol. 15, no. 461 (C-0887) 22 Novembre 1991 & JP-A-03 196 890 (IDEYA KK) 28 Août 1991 & DATABASE WPI Section Ch, Week 9141, Derwent Publications Ltd., London, GB; Class D15, AN 91-298496
- PATENT ABSTRACTS OF JAPAN vol. 17, no. 17 (C-1016) 13 Janvier 1993 & JP-A-04 244 289 (ASAHI CHEM IND) 01 Septembre 1992 & DATABASE WPI Section Ch, Week 9241, Derwent Publications Ltd., London, GB; Class D15, AN 92-337822
- PATENT ABSTRACTS OF JAPAN vol. 10, no. 318 (C-381) 29 Octobre 1986 & JP-A-61 129 014 (YOKOMASHI) 17 Juin 1986 & DATABASE WPI Section Ch, Week 8630, Derwent Publications Ltd., London, GB; Class D15, AN 86-194656

## Description

La présente invention concerne une station de traitement et de recyclage d'eau de lavage d'une machine à laver.

L'invention s'applique en général au lavage, par exemple d'instruments, dans les domaines scientifiques et médicaux et en particulier au domaine de la fabrication de circuits électroniques imprimés ou éventuellement intégrés.

La fabrication des circuits imprimés nécessite une phase de nettoyage des plaquettes ou des substrats sur lesquels ont été formés des pistes conductrices et/ou des composants électriques.

Le nettoyage des circuits imprimés comporte d'une part une action mécanique de finition, par aspersion des circuits ou par traitement d'ultrasons, et d'autre part une action chimique mettant en oeuvre divers produits solvants et détergents.

Certains vecteurs liquides peuvent contribuer au nettoyage des circuits. On peut citer, par exemple les chlorofluorocarbones (CFC) ou leurs substituts (HCFC), le trichloéthane, le propanol ou encore des produits aqueux associés à des détergents.

La plupart de ces produits, bien qu'efficaces, présentent certains désavantages liés à leur action néfaste sur l'environnement, leur toxicité et/ou leur trop grande inflammabilité.

Aussi, a-t-on de plus en plus recours à un nettoyage à base de solutions aqueuses additionnées de détergents.

Il reste cependant le problème du rejet des eaux usées contenant les détergents et résidus de lavage. En outre, l'eau entrant dans la composition des solutions aqueuses utilisées pour le lavage doit présenter un certain nombre de caractéristiques, notamment de résistivité, de dureté et de neutralité. Il est donc nécessaire de traiter l'eau avant qu'elle ne soit utilisée pour le nettoyage des circuits.

A titre d'exemple, il s'agit d'obtenir une eau dont la conductivité est inférieure à 10 µS (micro Siemens), dont le pH est de l'ordre de 7,5 ± 0,5, et ne contenant pas de particules de taille supérieure à 5 µm.

Dans une installation industrielle courante où la consommation en eau est élevée, le traitement de l'eau s'avère particulièrement coûteux.

En outre, certaines réglementations apportent des restrictions concernant la consommation en eau par unité de surface à nettoyer, la nature des effluents et la dureté de l'eau rejetée.

Il apparaît donc souhaitable de pouvoir disposer de moyens de recyclage de l'eau de lavage utilisée pour les circuits électroniques. Un exemple de moyens de recyclage de l'eau est donné par le document Patent Abstracts of Japan, vol. 15, n° 461 et JP-A-31 096890.

Un but de la présente invention est de fournir une station de traitement et de recyclage de l'eau utilisée dans une machine à laver, par exemple des circuits électroniques, ou autres, permettant de se conformer aux exigences de protection de l'environnement, aux exigences réglementaires éventuelles, et de réduire le coût du nettoyage.

Un autre but de l'invention est de fournir une station de traitement à un prix compétitif et adaptable aux besoins, par exemple de chaque unité de fabrication de circuits imprimés, quelle que soit son importance.

A cet effet l'invention, a pour objet une station de traitement telle que définie par la revendication 1.

Les termes amont et aval s'entendent par rapport au sens d'écoulement des eaux dans la canalisation de traitement.

La cuve de stockage est une première fois emplie d'eau de ville prélevée sur le réseau de distribution urbain et, comme l'eau de lavage est recyclée dans la canalisation de traitement, la station peut alors pratiquement travailler en cycle fermé. Une très faible adjonction d'eau permet de compenser les pertes et de maintenir un niveau de remplissage de réserve satisfaisant dans la cuve.

De plus, l'eau de lavage présente en général une minéralisation plus faible que l'eau du réseau de distribution urbain. Ainsi, des économies substantielles peuvent être réalisées non seulement sur l'eau mais aussi sur les moyens de déminéralisation.

La station de traitement selon l'invention peut être associée à tout type de machine à laver. Celle-ci peut notamment être polyvalente ou prévue pour un type particulier d'objets à nettoyer, tels par exemple des circuits imprimés.

Selon un aspect de l'invention, les premiers moyens de filtrage mécanique comportent une première et une seconde cartouche de filtrage. Ces cartouches recueillent les particules et les résidus mécaniques provenant notamment des circuits imprimés. Les première et seconde cartouches ont un pouvoir de coupure différent de manière à arrêter progressivement les particules selon leur taille. Les premiers moyens de filtrage sont placés de préférence soit juste avant, soit juste après les moyens de pompage et avant les autres moyens de traitement afin d'éviter que ceux-ci ne soient obturés par les particules.

Selon un autre aspect de l'invention, les moyens de filtrage chimique, qui sont prévus essentiellement pour retenir les détergents dans les eaux de lavage, sont équipés de filtres à charbon actif.

Des moyens de refroidissement pourvus d'un échangeur thermique sont disposés en amont des filtres à charbon actif, afin d'amener l'eau à une température de traitement adaptée à ce charbon actif, typiquement de l'ordre de 25°C.

De manière avantageuse, des seconds moyens de filtrage mécaniques peuvent être placés sur la canalisation de traitement et de recyclage en aval des moyens de filtrage chimique. Ces seconds moyens de filtrage mécanique retiennent d'éventuelles particules appelées "fines de charbon" pouvant provenir du charbon actif.

Les moyens de déminéralisation, disposés après les moyens de filtrage mécanique et chimique, comprennent selon l'invention deux déminéralisateurs montés en parallèle dans la canalisation de traitement et de recyclage.

Des vannes permettent de faire passer l'eau alternativement dans l'un ou dans l'autre déminéralisateur. On peut ainsi les isoler individuellement afin de les régénérer ou de les remplacer sans interrompre le fonctionnement de la station. Des moyens sont prévus également pour détecter la saturation des déminéralisateurs.

Un tamis peut en outre être placé dans la canalisation en aval des moyens de déminéralisation pour recueillir d'éventuelles particules de résine de déminéralisation qui s'échapperaient des déminéralisateurs.

Selon un autre aspect important de l'invention, divers moyens de contrôle associés notamment à des moyens de mesure et de pilotage de pression, sont disposés en différents endroits de la station. Par exemple, une sonde de mesure de pH peut être placée dans la canalisation en aval des moyens de déminéralisation. Un débitmètre peut être placé en aval des moyens de filtrage pour mesurer la quantité d'eau utilisée. Enfin, divers manomètres peuvent contrôler la pression et/ou la perte de charge le long de la canalisation de traitement afin de détecter la saturation des moyens de filtrage mécanique ou une éventuelle fuite sur l'un des moyens de traitement.

Une canalisation relie la machine à laver à la cuve de stockage et alimente cette dernière en eau de lavage usée. Une seconde canalisation, munie d'une électrovanne permet de rajouter de l'eau de ville dans la cuve à partir du réseau de distribution urbain.

Selon un autre aspect de l'invention, la cuve comporte un détecteur de niveau bas permettant de déclencher l'ouverture de l'électrovanne et un détecteur de niveau haut permettant de refermer l'électrovanne quand le niveau d'eau a monté dans la cuve. Le remplissage de la cuve est ainsi entièrement automatique.

Un boîtier de commande général peut être prévu pour piloter les différents moyens de traitement, essentiellement les moyens de pompage et les moyens de refroidissement ; ce boîtier comporte des voyants de contrôle associés.

Le boîtier de commande permet de centraliser également les informations provenant des moyens de contrôle et comprend des interrupteurs d'arrêt d'urgence notamment des moyens de pompage.

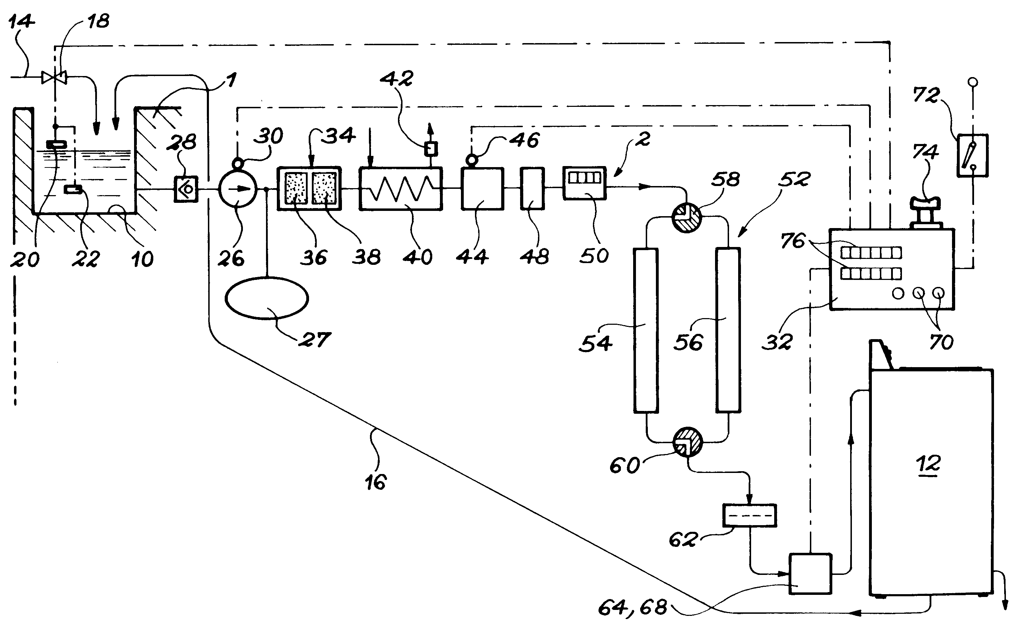

D'autres caractéristiques et avantages de l'invention ressortiront mieux de la description qui va suivre, donnée à titre purement illustratif et non limitatif, en référence à la figure unique annexée qui est une vue schématique d'une station de traitement et de recyclage selon l'invention.

La station telle que représentée à la figure unique comporte un châssis 1 (partiellement représenté) supportant une cuve de stockage 10.

Cette cuve peut recevoir les eaux usées de lavage d'une machine à laver 12 au moyen d'une canalisation 16, et de l'eau de ville provenant du réseau de distribution, au moyen d'une canalisation 14.

Divers autres produits, tels que des produits antibactériologiques peuvent également être introduits dans la cuve au moyen d'une vanne, non représentée, qui les dispense à un taux déterminé.

La cuve 10, par exemple d'une contenance de 70 litres, constitue une réserve d'eau et alimente la machine 12 par une canalisation 2 de traitement et de recyclage comportant un certain nombre de moyens de traitement décrits dans la suite.

La cuve joue également un rôle de décanteur, notamment pour les produits lourds qui sont ainsi éliminés séparément.

Un appoint en eau de ville peut être effectué en ouvrant une électrovanne 18 placée sur la conduite 14. Cet appoint est en général inférieur à 10% de l'eau utilisée pour un cycle de lavage.

L'appoint en eau peut être rendu automatique grâce à deux sondes 20, 22 détectant un niveau minimum et maximum de liquide dans la cuve 10 et qui déclenchent respectivement l'ouverture et la fermeture de la vanne 18.

Les sondes 20, 22 peuvent être par exemple de simples flotteurs commandant des contacts électriques.

La canalisation 2 débouche dans le fond de la cuve 10. Elle comporte successivement, en partant de la cuve, un clapet antiretour 28 et des moyens de pompage 26.

Les moyens de pompage 26 comprennent une pompe, par exemple d'une puissance de 0,75 kW et d'une capacité de 20 litres par minute environ. Les moyens de pompage comprennent également un manomètre 30 et un contacteur manométrique permettant de le relier électriquement à un boîtier de commande 32. La pression de l'eau à sa sortie est réglée à environ 3 bars. Un accumulateur hydraulique tampon 27 d'environ 25 litres est prévu également à la sortie de la pompe.

En aval des moyens de pompage 26 sont montés des premiers moyens de filtrage mécanique 34 pourvus de deux cartouches de filtrage 36, 38 interchangeables, par exemple en acier inoxydable et ayant respectivement un pouvoir de coupure de 50 µm et de 10 µm.

En aval des moyens de filtrage 34, la canalisation 2 comporte des moyens de refroidissement incluant un échangeur thermique 40, équipé d'une vanne et d'un thermostat 42 et permettant de refroidir l'eau filtrée à environ 25°C. L'échangeur 40 doit être assez largement dimensionné car l'eau de lavage part de la machine à laver avec une température proche de 70°C.

L'eau, une fois refroidie est envoyée vers des moyens de filtrage chimique constitués, dans l'exemple décrit, par un filtre 44 à charbon actif qui retient les détergents. Le filtre 44 permet notamment de soustraire à l'eau traitée des résidus de saponifiant et de flux d'étamage décomposé, à base de résine et de propanol. Un manomètre 46 permet de vérifier la pression sur le filtre 44.

Des seconds moyens de filtrage mécanique 48 disposés juste à la sortie du filtre 44 recueillent les "fines de charbon" qui sont des déchets pouvant provenir du charbon actif. Les seconds moyens de filtrage mécanique 48 contiennent une cartouche de filtrage par exemple d'un pouvoir de coupure de 5 µm environ.

Un débitmètre totalisateur 50 est prévu dans la canalisation 2, après le filtre 48, pour mesurer la quantité d'eau traitée par la station.

Après le filtrage mécanique et chimique, intervient une étape de déminéralisation. Des moyens de déminéralisation 52 sont placés sur la canalisation 2 après les filtres 34, 40, 44 et 48 et en aval du débitmètre 50.

Ces moyens 52 comportent deux déminéralisateurs 54, 56, par exemple manuels, à lits mélangés et montés en parallèle. Chaque déminéralisateur peut être formé par une colonne contenant 12 litres de résine.

Des vannes à trois points 58, 60 montées en aval et en amont des déminéralisateurs permettent de mettre hors circuit l'une ou l'autre des colonnes afin par exemple d'en remplacer la résine de déminéralisation, sans interrompre le traitement.

Un tamis 62, monté en aval des moyens de déminéralisation 52 retient des résidus de résine qui s'en échapperaient.

Des sondes de pH-mètre 64 et de conductivimètre 68 analysent la qualité de l'eau après l'unité 52. Par exemple, dans le cas particulier d'une application au lavage des circuits imprimés, la conductivité de l'eau doit être au plus égale à 10 µS et le pH doit être voisin de 7,5.

L'eau ainsi traitée est réutilisée par la machine à laver 12, raccordée sur la canalisation 2 en aval du tamis 62.

Afin de piloter et de contrôler le fonctionnement de la station, le boîtier de commande 32 centralise les informations provenant des sondes 64, 68, des manomètres 30, 46, ainsi que de manomètres non représentés placés par exemple en amont et en aval des moyens de filtrage.

Le boîtier de commande 32 comporte des voyants 70 signalant des défauts et notamment le dysfonctionnement des moyens de pompage 26 ou une perte de charge sur la canalisation 2 résultant du colmatage d'un filtre, ou d'une fuite. Différents moyens de commande, par exemple des moyens de pompage 26, des moyens de refroidissement et de l'électrovanne, peuvent être prévus également dans le boîtier 32.

La vanne 18 et les sondes 20 et 22 sont également reliées au boîtier 32.

Un interrupteur général 72, un interrupteur (non représenté) des moyens de pompage et un dispositif d'arrêt d'urgence 74 de type "coup de poing" assurent la sécurité du fonctionnement.

Des afficheurs 76 du boîtier de commande indiquent les caractéristiques de dureté et d'acidité de l'eau traitée.

L'eau ainsi traitée peut donc être réutilisée dans la machine à laver pendant une très longue période.

Il est à noter que la station peut éventuellement recycler l'eau de lavage en provenance de plusieurs machines à laver.

La station de traitement de l'eau peut être adaptée aux exigences de différentes installations de lavage en modifiant selon le cas le pouvoir de coupure des filtres, la nature des filtres chimiques et la quantité de résine de déminéralisation.

Les organes de l'installation particulièrement exposés à la corrosion sont avantageusement réalisés en acier inoxydable ou en polypropylène.

Finalement, grâce à l'invention, il est possible non seulement de réduire la quantité de résine de déminéralisation utilisée mais surtout d'économiser beaucoup d'eau. L'eau prélevée sur le réseau de distribution représente une part inférieure à 10% de la quantité d'eau totale traversant le compteur 50 lors d'une utilisation en continu.

## Revendications

1. Station de traitement et de recyclage d'eau de lavage pour machine à laver, caractérisée par le fait qu'elle comprend :
- une cuve de stockage (10) dans laquelle débouchent une canalisation (16) d'amenée d'eau de lavage en provenance d'au moins une machine à laver (12), et une canalisation (14) d'amenée d'eau de ville ;
- une canalisation (2) de traitement et de recyclage reliant le fond de la cuve de stockage (10) à la machine à laver (12) et dans laquelle sont placés :
• des moyens de pompage (26) pour aspirer et mettre sous pression l'eau provenant de la cuve de stockage (10) ;
• des premiers moyens de filtrage mécanique (34) et des moyens de filtrage chimique (44);
• des moyens de refroidissement de l'eau (40), placés en amont des moyens de filtrage chimique, et
• des moyens de déminéralisation (52) de l'eau disposés en aval des moyens de filtrage mécaniques et chimiques, les moyens de déminéralisation (52) comprenant au moins deux déminéralisateurs (54, 56) montés en parallèle dans la canalisation (2) de traitement et de recyclage, des moyens pour détecter une saturation des déminéralisateurs, et des vannes (58, 60) pour isoler chacun d'entre eux afin de permettre leur régénération sans interrompre le fonctionnement de la station.

2. Station selon la revendication 1, caractérisée par le fait qu'un tamis (62) est placé dans la canalisation (2) de traitement et de recyclage, à la sortie des moyens de déminéralisation (52).

3. Station selon l'une des revendications 1 ou 2, caractérisée en ce que les premiers moyens de filtrage mécanique (34) comportent une première et une seconde cartouches de filtrage (36, 38), ladite première cartouche (36) présentant un pouvoir de coupure moins fin que la seconde cartouche (38).

4. Station selon la revendication 3, caractérisée en ce que la première cartouche (36) présente un pouvoir de coupure sensiblement égal à 50 µm tandis que la seconde cartouche (38) présente un pouvoir de coupure sensiblement égal à 10 µm.

5. Station selon l'une quelconque des revendications précédentes, caractérisée en ce que les moyens de filtrage chimique comportent un filtre de charbon actif (44).

6. Station selon la revendication 5, caractérisée en ce que des seconds moyens de filtrage mécanique (48) sont placés sur la canalisation (2) de traitement et de recyclage, en aval des moyens de filtrage chimique.

7. Station selon l'une quelconque des revendications précédentes, caractérisée en ce qu'elle comporte des moyens de mesure et de pilotage de pression disposés sur la canalisation (2).

8. Station selon l'une quelconque des revendications précédentes, caractérisée par le fait qu'une sonde de mesure de pH (64) est placée dans la canalisation de traitement et de recyclage, en aval des moyens de déminéralisation.

9. Station selon l'une quelconque des revendications précédentes, caractérisée par le fait qu'un débitmètre (50) est placé dans la canalisation (2) de traitement et de recyclage.

10. Station selon l'une quelconque des revendications précédentes, caractérisée par le fait que la canalisation (14) d'amenée d'eau de ville comporte une électrovanne (18) normalement fermée, dont l'ouverture est commandée par un détecteur (22) de niveau bas placé dans la cuve de stockage.

11. Station selon la revendication 10, caractérisée par le fait qu'elle comporte de plus un boîtier de commande (32) incluant un interrupteur général (72) ; un interrupteur de commande des moyens de pompage ; un dispositif d'arrêt d'urgence (74) ; des moyens de commande des moyens de pompage, des moyens de refroidissement et de l'électrovanne ; des voyants de défaut (70) des moyens de pompage et des afficheurs (76) de la qualité de l'eau.

12. Station selon la revendication 11, caractérisée par le fait qu'elle comprend un châssis (1) portant la cuve de stockage (10), le boîtier de commande (32), la canalisation (2) de traitement et de recyclage et les différents moyens placés dans cette canalisation.

## Claims

1. Station for treating and recycling washwater for a washing machine, characterized in that it comprises:
- a storage tank (10) into which a line (16) feeding washwater from at least one washing machine (12) and a line (14) feeding mains supply water deliver;
- a treatment and recycling line (2) which connects the bottom of the storage tank (10) to the washing machine (12) and in which the following are placed:
• pumping means (26) for taking in and pressurizing the water from the storage tank (10);
• first means (34) for mechanical filtering and means (44) for chemical filtering;
• water cooling means (40) placed upstream of the chemical filtering means, and
• water demineralization means (52) arranged downstream of the mechanical and chemical filtering means, the demineralization mans (52) comprising at least two demineralizers (54, 56) mounted in parallel in the treatment and recycling line (2), means for detecting saturation of the demineralizers, and valves (58, 60) for isolating each of them in order to allow their regeneration without interrupting the operation of the station.

2. Station according to Claim 1, characterized in that a screen (62) is placed in the treatment and recycling line (2), at the outlet of the demineralization means (52).

3. Station according to either of Claims 1 and 2, characterized in that the first means (34) for mechanical filtering include a first and a second filtering cartridge (36, 38), the said first cartridge (36) having a less fine cutoff capability than the second cartridge (38).

4. Station according to Claim 3, characterized in that the first cartridge (36) has a cutoff capability substantially equal to 50 µm, while the second cartridge (38) has a cutoff capability substantially equal to 10 µm.

5. Station according to any one of the preceding claims, characterized in that the chemical filtering means comprise an active carbon filter (44).

6. Station according to Claim 5, characterized in that second means (48) for mechanical filtering are placed along the treatment and recycling line (2), downstream of the chemical filtering means.

7. Station according to any one of the preceding claims, characterized in that it includes pressure measurement and control means arranged along the line (2).

8. Station according to any one of the preceding claims, characterized in that a pH measurement probe (64) is placed in the treatment and recycling line, downstream of the demineralization means.

9. Station according to any one of the preceding claims, characterized in that a flow meter (50) is placed in the treatment and recycling line (2).

10. Station according to any one of the preceding claims, characterized in that the line (14) for feeding mains supply water includes a normally closed solenoid valve (18) which is caused to open by a low-level detector (22) placed in the storage tank.

11. Station according to Claim 10, characterized in that it furthermore includes a control unit (32) including a general switch (72); a control switch for the pumping means; and an emergency shutdown device (74); means for controlling the pumping means, the cooling means and the solenoid valve; error warning lights (70) for the pumping means and displays (76) for the quality of the water.

12. Station according to Claim 11, characterized in that it comprises a chassis (1) supporting the storage tank (10), the control unit (32), and the treatment and recycling line (2) and the various means placed in this line.

## Patentansprüche

1. Vorrichtung zur Behandlung und Rückführung von Waschwasser für eine Waschmaschine,
**dadurch gekennzeichnet,** daß sie umfaßt:
- eine Speicherwanne (10), in die eine Zuführungsleitung (16) von Waschwasser, das von wenigstens einer Waschmaschine (12) stammt, und eine Zuführungsleitung (14) für Frisch- bzw. Leitungswasser mündet;
- eine Behandlungs- und Rückführungsleitung (2), die den Boden der Speicherwanne (10) mit der Waschmaschine (12) verbindet und in der angeordnet sind:
• Pumpeinrichtungen (26), um aus der Speicherwanne (10) kommendes Wasser anzusaugen und unter Druck zu setzen;
• erste mechanische Filtriereinrichtungen (34) und chemische Filtriereinrichtungen (44);
• Wasserkühleinrichtungen (40), stromaufwärts von den chemischen Filtriereinrichtungen angeordnet; und
• Entmineralisierungs- bzw. Entsalzungseinrichtungen (52) des Wassers, stromabwärts von den mechanischen und chemischen Filtriereinrichtungen angeordnet, wobei diese Einrichtungen (52) wenigstens zwei Entmineralisierungs bzw. Entsalzungseinheiten (54, 56), parallelgeschaltet in der Behandlungs- und Rückführungsleitung (2), und Detektionseinrichtungen einer Sättigung der Entmineralisierungs- bzw. Entsalzungseinheiten und Ventile (58, 60) umfassen, um jede von ihnen zu isolieren, so daß ihre Regenerierung möglich ist, ohne den Betrieb der Vorrichtung zu unterbrechen.

2. Vorrichtung nach Anspruch 1, dadurch gekennzeichnet, daß ein Sieb (62) in der Behandlungs- und Rückführungsleitung (2) angeordnet ist, am Ausgang der Entmineralisierungs- bzw. Entsalzungseinrichtungen (52).

3. Vorrichtung nach einem der Ansprüche 1 oder 2, dadurch gekennzeichnet, daß die ersten mechanischen Filtriereinrichtungen (34) einen ersten und einen zweiten Filtereinsatz (36, 38) umfassen, wobei der erste Einsatz (36) ein weniger feines Sperrvermögen aufweist als der zweite Einsatz (38).

4. Vorrichtung nach Anspruch 3, dadurch gekennzeichnet, daß der erste Einsatz (36) ein Sperrvermögen von im wesentlichen gleich 50 µm aufweist, während der zweite Einsatz (38) ein Sperrvermögen von im wesentlichen gleich 10µm aufweist.

5. Vorrichtung nach einem der vorangehenden Ansprüche, dadurch gekennzeichnet, daß die chemischen Filtriereinrichtungen einen Aktivkohlefilter (44) umfassen.

6. Vorrichtung nach Anspruch 5, dadurch gekennzeichnet, daß zweite mechanische Filtriereinrichtungen (48) sich in der Behandlungs- und Rückführungsleitung (2) befinden, stromabwärts von den chemischen Filtriereinrichtungen.

7. Vorrichtung nach einem der vorangehenden Ansprüche, dadurch gekennzeichnet, daß sie Druckmeß- und -steuerungseinrichtungen umfaßt, angeordnet in der Leitung (2).

8. Vorrichtung nach einem der vorangehenden Ansprüche, dadurch gekennzeichnet, daß eine pH-Meßsonde (64) sich in der Behandlungs- und Rückführungsleitung (2) befindet, stromabwärts von den Demineralisations- bzw. Entsalzungseinrichtungen.

9. Vorrichtung nach einem der vorangehenden Ansprüche, dadurch gekennzeichnet, daß sich in der Behandlungs- und Rückführungsleitung (2) ein Durchflußmengenmesser (50) befindet.

10. Vorrichtung nach einem der vorangehenden Ansprüche, dadurch gekennzeichnet, daß die Frischwasser-Zuführungsleitung (14) ein normalerweise geschlossenes Elektroventil (18) umfaßt, dessen Öffnung durch einen Niederpegel-Detektor (22) gesteuert wird, der in der Speicherwanne angeordnet ist.

11. Vorrichtung nach Anspruch 10, dadurch gekennzeichnet, daß sie außerdem einen Schaltschrank (32) enthält, der einen Hauptschalter (72), einen Schalter für die Pumpeinrichtungen, eine Not-Aus-Einrichtung (74) und Steuereinrichtungen für die Pumpeinrichtungen, die Kühleinrichtungen und die Elektroventile umfaßt, sowie Störungskontrollampen (70) und Wasserqualitätsanzeigen (76).

12. Vorrichtung nach Anspruch 11, dadurch gekennzeichnet, daß sie ein Gestell 1 umfaßt, das die Speicherwanne (10), den Schaltschrank (32), die Behandlungs- und Rückführungsleitung (2) und die verschiedenen in dieser Leitung angeordneten Einrichtungen trägt.
